Europäisches Patentamt

European Patent Office

Office européen des brevets

(19)

(11) Publication number: **0 400 690**

**A1**

(12)

# EUROPEAN PATENT APPLICATION

(21) Application number: **90114563.1**

(22) Date of filing: **10.02.87**

(51) Int. Cl.⁵: **G05D 1/06**

This application was filed on 30 - 07 - 1990 as a divisional application to the application mentioned under INID code 60.

(30) Priority: **13.02.86 US 829731**

(43) Date of publication of application:
**05.12.90 Bulletin 90/49**

(60) Publication number of the earlier application in accordance with Art.76 EPC: **0 256 124**

(84) Designated Contracting States:
**BE CH DE FR GB IT LI NL SE**

(71) Applicant: **SUNDSTRAND DATA CONTROL, INC.**
**15001 N.E. 36th Street P.O. Box 97001**
**Redmond, WA 98073-9701(US)**

(72) Inventor: **Muller, Hans R.**
**10567 - 158th Avenue N.E.**
**Redmond, Washington 98052(US)**
Inventor: **Glover, John H., c/o Sundstrand**
**Corporation**
**4949 Harrison Avenue, PO Box 7003**
**Rockford, Illinois 61125-7003(US)**

(74) Representative: **SERJEANTS**
**25, The Crescent King Street**
**Leicester, LE1 6RX(GB)**

(54) **Wind shear detection and alerting system.**

(57) A wind shear detection and warning system for an aircraft includes means responsive to a wind shear signal for providing a warning when the wind shear encountered by the aircraft exceeds a threshold level. The threshold level may be altered as a function of the previous history and/or the current trend of the shear signal. For example, the threshold level may be reduced if the system detects tail shear following head shear or in response to an increasing tail shear trend.

EP 0 400 690 A1

Fig. 1

## Field of the Invention

This invention relates generally to wind shear detection systems, and more particularly to airborne wind shear detection systems for alerting the pilot of a wind shear condition if the aircraft penetrates a wind shear condition of sufficient force to pose a hazard to the aircraft.

This invention is fully disclosed in EP A 256124 from which this Application is divided.

## Description of Prior Art

Various wind shear detection and warning systems are known. One such system is disclosed in European Patent No.0125087, !in which on board measurements of various aircraft flight parameters are used to provide signals representing wind shear components in the horizontal and vertical directions, and their rates of change with time. A warning of moderate wind shear is given if either wind shear signal is sustained above a predetermined level and a warning of severe wind shear is given if increasing tail shear is detected within a fixed period thereafter.

## Summary of the Invention

The invention provides a wind shear detection and warning system for an aircraft, comprising means for providing a signal that is a measure of the wind shear encountered by the aircraft; means responsive to the wind shear signal for providing a wind shear warning when the wind shear signal exceeds a threshold level; and means for altering the threshold level as a function of the previous history and/or the current trend of the shear signal.

In one preferred embodiment of the invention the threshold level is reduced in response to a tail shear following a head shear. In a second preferred embodiment the threshold level is reduced in response to an increasing tail shear trend.

## Description of the drawings

Figure 1 is a block diagram illustrating logic circuitry incorporating the present invention that is responsive to a 'shear' signal for generating warning and advisory signals.

Figures 2 and 3 show waveforms derived from a 'shear' signal that cause the logic circuitry of Figure 1 to provide an advanced warning.

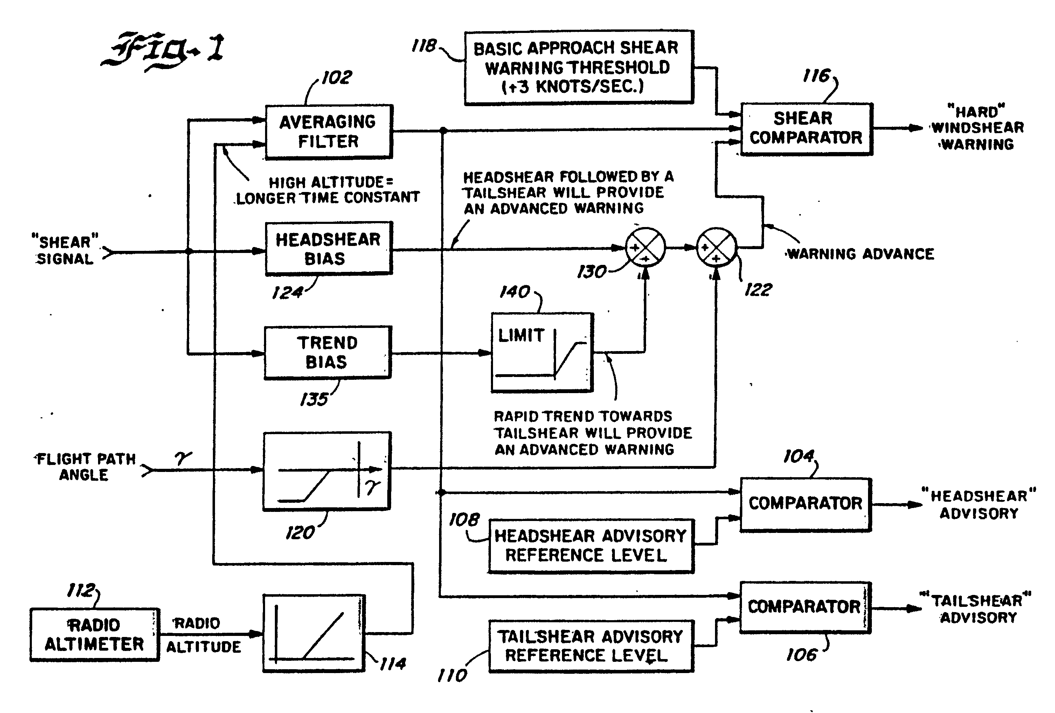

In Figure 1, the logic circuit receives as an input a 'shear' signal representative of the wind shear encountered by the aircraft. Such a signal may suitably be provided by the wind shear detection system of EP A 256124. The 'shear' signal is applied to an averaging filter 102 whose output may then be applied to a pair of comparators 104 and 106. The comparators 104 and 106 compare the filtered 'shear' signal with a pair of reference signals, namely a head shear advisory level and a tail shear advisory level obtained from a head shear advisory reference level circuit 108 and a tail shear advisory reference level circuit 110. If either reference level is exceeded by the filtered shear signal, either a head shear advisory or a tail shear advisory message will be generated. Such an advisory indication would be advantageous in a reversing shear type of situation since a head shear followed by a tail shear is particularly hazardous.

The system could also be made responsive to radio altitude to make the system more sensitive near the ground and less sensitive at higher altitudes. In the block diagram illustrated in Figure 1, a radio altitude signal from a radio altimeter 112 is applied to a function generator 114 to provide a signal which alters the time constant of the averaging filter 102 as a function of radio altitude.

In addition, by utilizing a comparator such as a comparator 116, the criteria at which a wind shear warning is given are altered as a function of various flight parameters. For example a hard wind shear warning requiring the pilot to take immediate action is generated when the wind shear exceeds a predetermined warning reference, such as, for example, 3 knots per second (1.54m/s 2) as provided by a basic approach shear warning threshold reference circuit 118. However, the comparator is biased so that the warning is given before the basic warning threshold is crossed under particularly hazardous conditions. For example. the warning can be advanced as a function of flight path angle, with the warning being increased for unusually steep flight path angles. For example, by applying a flight path angle signal to a function generator 120 a biasing signal that is a function of flight path angle can be generated. This signal can be used to advance the warning by applying the bias signal to the comparator 116 via a summing junction 122.

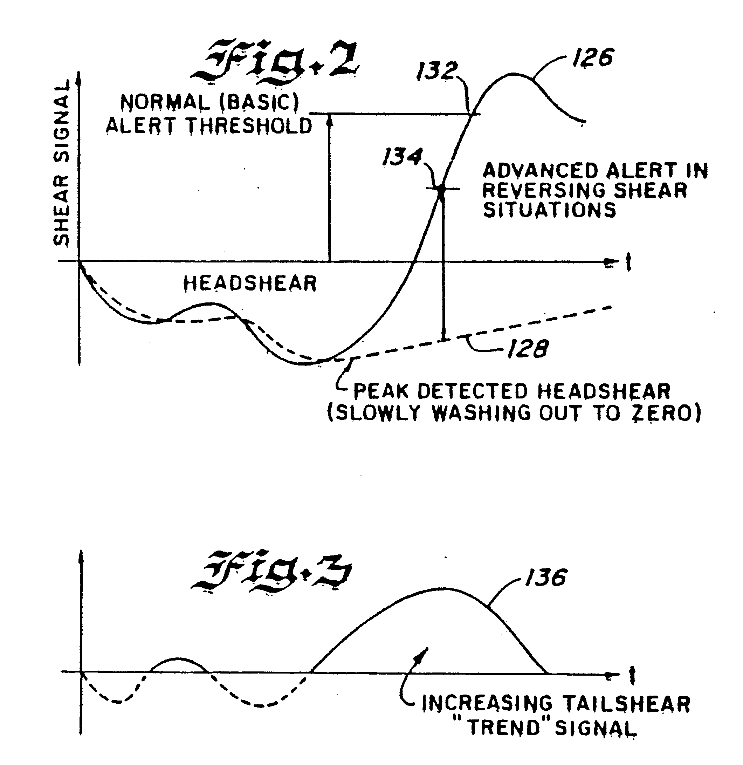

As previously stated, one particularly hazardous condition exists when a head shear is followed by a tail shear because such a condition results in a rapid loss of air speed that could cause the aircraft to stall if appropriate action is not taken. Thus, a head shear bias circuit 124 is provided to advance the warning in the event of a head shear followed by a tail shear. This is accomplished by peak detecting the 'shear' signal, for example the signal represented by a waveform 126 (Figure 2), so that any head shear component of the waveform 126 would be peak detected to provide a peak detected head shear signal that slowly washes out as a function of time as is illustrated, for example, by a waveform 128. The peak detected head shear signal would then be applied to the comparator 116, for example, via a summing junction 130 and the summing junction 122 to advance the warning from the normal three knots per second illustrated by the point 132 (Figure 2) to a lower value, for example, a point 134.

In addition, the warning could be advanced as a function of an increasing tail shear trend. For example, the 'shear' signal as represented by the waveform 126 could be differentiated by a trend bias circuit 135 to provide a trend bias signal as illustrated by a waveform 136 (Figure 3). The trend bias signal from the circuit 135 could be passed through a limiter such as a limiter 140 which would pass only increasing tail shear trends to the comparator 116, for example, via the summing junctions 130 and 122 to bias the comparator 116 to advance the hard warning in the event of an increasing tail shear trend.

## Claims

1. A wind shear detection and warning system for an aircraft, comprising:
means for providing a signal that is a measure of the wind shear encountered by the aircraft;
means 116 responsive to the wind shear signal for providing a wind shear warning when the wind shear signal exceeds a threshold level; and
means 130 for altering the threshold level as a function of the previous history and/or the current trend of the shear signal.

2. A system according to claim 1, wherein the threshold level is reduced in response to a tail shear following a head shear.

3. A system according to claim 2, wherein the means 130 for altering the threshold level comprises:
means 124 for peak detecting the wind shear signal to provide a head shear signal 128, the head shear signal being applied to the warning means 116 to reduce the threshold level.

4. A system according to claim 3 wherein the head shear signal 128 washes out as a function of time between peaks in the wind shear signal 126.

5. A system according to any preceding claim, wherein the threshold level is reduced in response to an increasing tail shear trend.

6. A system according to claim 5, wherein the means 130 for altering the threshold level comprises:
means 135 for differentiating the wind shear signal 126 to provide a trend bias signal 136; and
limiting means 140 to pass only positive trend bias signals 136 from the differentiating means 135 to the warning means 116 to reduce the threshold level.

7. A system according to any preceding claim, further comprising:
means for providing a signal representative of the flight path angle of the aircraft: and
means 120, 122 responsive to the flight path angle signal for reducing the threshold level in response to a steeply descending flight path.

8. A system according to any preceding claim, further comprising:
means 112 for providing a signal that is a measure of the radio altitude of the aircraft; and
means 102 responsive to the radio altitude signal to make the system more sensitive at low altitudes and less sensitive at high altitudes.

9. A system according to claim 8, wherein the wind shear signal passes through an averaging filter 102, having a variable time constant, the system being made more sensitive at low altitudes by decreasing the time constant of the filter and less sensitive at high altitudes by increasing the time constant of the filter.

**Fig. 1**

"SHEAR" SIGNAL → AVERAGING FILTER (102)

HIGH ALTITUDE = LONGER TIME CONSTANT

BASIC APPROACH SHEAR WARNING THRESHOLD (±3 KNOTS/SEC.) (118)

SHEAR COMPARATOR (116) → "HARD" WINDSHEAR WARNING

HEADSHEAR BIAS (124)

HEADSHEAR FOLLOWED BY A TAILSHEAR WILL PROVIDE AN ADVANCED WARNING

WARNING ADVANCE (122)

TREND BIAS (135)

(130)

LIMIT (140)

RAPID TREND TOWARDS TAILSHEAR WILL PROVIDE AN ADVANCED WARNING

FLIGHT PATH ANGLE → γ (120)

COMPARATOR (104) → "HEADSHEAR" ADVISORY

HEADSHEAR ADVISORY REFERENCE LEVEL (108)

COMPARATOR (106) → "TAILSHEAR" ADVISORY

TAILSHEAR ADVISORY REFERENCE LEVEL (110)

RADIO ALTIMETER (112) → RADIO ALTITUDE → (114)

# Fig.2

**SHEER SIGNAL**

NORMAL (BASIC)
ALERT THRESHOLD

_132_

_126_

_134_

ADVANCED ALERT IN
REVERSING SHEAR
SITUATIONS

HEADSHEAR

─ t

_128_

PEAK DETECTED HEADSHEAR
(SLOWLY WASHING OUT TO ZERO)

# Fig.3

_136_

─ t

INCREASING TAILSHEAR
"TREND" SIGNAL

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-4189777 (D. KUNTMAN)<br>* column 2, line 54 – column 6, line 13; figures 1-5 * | 1, 2 | G05D1/06 |
| A | | 8, 9 | |
| Y | EP-A-0005662 (SOCIETE FRANCAISE D'EQUIPEMENTS POUR LA NAVIGATION AERIENNE)<br>* page 3, line 22 – page 9, line 6; figure 1 * | 1, 2 | |
| A | | 3-6 | |
| Y | US-A-4079905 (L.M. GREENE)<br>* column 1, line 67 – column 6, line 13; figures 1, 2 * | 1 | |
| A | | 2-7 | |
| D,Y | EP-A-0125087 (SPERRY CORP.)<br>* page 4, line 28 – page 21, line 17; figures 1-9 * | 1 | |
| A | | 4 | |
| Y | GB-A-1586839 (J.H. BLISS)<br>* page 2, line 100 – page 9, line 71; figures 1-12 * | 1 | **TECHNICAL FIELDS SEARCHED (Int. Cl.4)** |
| A | | 2, 3, 7 | G05D<br>B64D |
| A | EP-A-0031619 (THE BOEING COMP.)<br>* page 8, line 10 – page 15, line 4; figures 1-10c * | 7 | G01P<br>G01C |
| E | EP-A-0229197 (THE BOEING COMP.)<br>* column 2, line 29 – column 10, line 20; figures 1-4b * | 1, 4, 7-9 | |
| E | EP-A-0235962 (HONEYWELL INC.)<br>* page 3, line 27 – page 11, line 27; figures 1-11 * | 1, 4 | |

The present search report has been drawn up for all claims

| Place of search | Date of completion of the search | Examiner |
|---|---|---|
| THE HAGUE | 19 SEPTEMBER 1990 | FOURRICHON P.M.L. |